# EUROPÄISCHE PATENTSCHRIFT

(11) **EP 1 587 674 B1**
(45) Veröffentlichungstag und Bekanntmachung des Hinweises auf die Patenterteilung: **17.12.2008**
(21) Anmeldenummer: 04765522.0
(22) Anmeldetag: 23.09.2004
(51) Int. Cl.: B32B 5/18, E04B 1/80, B60N 3/04

(54) **MEHRSCHICHTIGES, SCHALLABSORBIERENDES LEICHTBAUTEIL, INSBESONDERE FUER KRAFTFAHRZEUGE**
MULTILAYER SOUND-ABSORBING COMPONENT, IN PARTICULAR FOR MOTOR VEHICLES
COMPOSANT LEGER MULTICOUCHE ABSORBANT LES SONS NOTAMMENT DESTINE A DES VEHICULES

(30) Priorität: 23.12.2003 DE 20320102 U
(43) Veröffentlichungstag der Anmeldung: 26.10.2005
(73) Patentinhaber: Carcoustics TechConsult GmbH, 51381 Leverkusen (DE)
(72) Erfinder: KALLENBERG, Albert, 50354 Hürth (DE)
(74) Vertreter: Meyer, Hans-Joachim
(86) Internationale Anmeldenummer: PCT/EP2004/010662
(87) Internationale Veröffentlichungsnummer: WO 2005/065933

(56) Entgegenhaltungen:
- CA-A- 2 280 424
- DE-A- 3 430 775
- DE-A- 3 905 607
- DE-A- 19 960 945
- DE-U- 8 812 664
- DE-U- 29 619 592

## Beschreibung

Die Erfindung betrifft ein mehrschichtiges, schallabsorbierendes Leichtbauteil, insbesondere für Kraftfahrzeuge, mit einer luftdurchlässigen Deckschicht und mindestens einer luftdurchlässigen Vliesschicht aus thermoplastischen Fasern, wobei die Deckschicht schalldurchlässig mit der Vliesschicht gekoppelt ist.

Es wurden bereits eine Vielzahl von Materialien und Systemen zur Verringerung der von Kraftfahrzeugen ausgehenden Schallemissionen, insbesondere zur Verringerung des Geräuschpegels in Fahrzeug-Fahrgasträumen entwickelt.

Vielfach werden zur Schallisolierung in Personenkraftwagen so genannte Resonanzabsorber eingesetzt. Dabei handelt es sich um selektive Feder-Masse-Systeme, die zur Resonanz angeregt werden sollen und deren optimale Wirkung im jeweiligen Resonanzbereich liegt. Als Feder dienen dabei üblicherweise elastische Vliesmaterialien und/oder Schaumstoffe, die mit einer Schwerschicht aus Kautschuk oder einem Elastomer als Masse gekoppelt werden. Herkömmliche Feder-Masse-Systeme haben nur eine schmalbandige Wirkung. Nachteilig ist aber insbesondere, dass sie aufgrund der Schwerschichtmasse eine relativ hohe Flächenmasse aufweisen, was hinsichtlich des Fahrzeuggesamtgewichts und der zulässigen Zuladung sowie hinsichtlich eines möglichst niedrigen Kraftstoffverbrauchs ungünstig ist.

In der DE 199 60 945 A1 ist eine Bodenverkleidung für Kraftfahrzeuge beschrieben, die ohne Beeinträchtigung der akustischen Wirksamkeit eine besonders geringe Flächenmasse aufweisen soll. Diese bekannte Bodenverkleidung besteht im wesentlichen aus einer Teppichschicht, einer darunter angeordneten Schallisolierung und einer weichen Polyurethan-Schaumstoffschicht, wobei die Schallisolierung aus einem Zweilagenvlies, nämlich aus einem Polyester-Vlies und einem darunter angeordneten Polypropylen-Vlies gebildet ist. Das Zweilagenvlies weist eine Flächenmasse von 600 bis 1.000 g/m² auf. Die Teppichschicht ist eine Polyamid-Tuft-Velourteppichware und besteht aus einer Polyamid-Stapelfaserschicht, einem Trägervlies und einer Einbindung. Das Zweilagenvlies ist durch eine Polyethylen-Sinterschicht ganzflächig auf den Rücken der Teppichschicht aufgesintert. An der Unterseite des Zweilagenvlieses ist eine Polyethylen/Polyamid-Dichtfolie aufkaschiert, die das Zweilagenvlies gegen Schaumdurchschüsse aus der im Hinterschäumprozess gebildeten Polyurethan-Schaumstoffschicht abdichtet.

Der vorliegenden Erfindung liegt die Aufgabe zugrunde, ein Bauteil der eingangs genannten Art zu schaffen, das relativ leicht ist und gleichzeitig eine hohe oder sogar verbesserte akustische Wirksamkeit besitzt.

Gelöst wird diese Aufgabe erfindungsgemäß durch ein Bauteil mit den in Anspruch 1 angegebenen Merkmalen.

Das erfindungsgemäße schallabsorbierende Bauteil weist eine luftdurchlässige Deckschicht und mindestens eine luftdurchlässige Vliesschicht aus thermoplastischen Fasern auf, wobei die Deckschicht schalldurchlässig mit der Vliesschicht gekoppelt ist. Das Bauteil ist im wesentlichen weiter dadurch gekennzeichnet, dass die Vliesschicht bei einem Flächengewicht im Bereich von 500 bis 1.500 g/m² eine Dicke im Bereich von 2 bis 7 mm aufweist und mit der Deckschicht nicht oder nur partiell mit einem Flächenanteil von weniger als 20% ihrer der Deckschicht zugewandten Fläche verbunden ist.

Das erfindungsgemäße Bauteil ist sehr leicht im Vergleich zu herkömmlichen schallisolierenden Verkleidungen, die ein Feder-Masse-System mit einer luftdichten Schwerschicht bilden. Erfindungsgemäß ist die Vliesschicht mit der Deckschicht nicht oder nur partiell verbunden. Durch diese im wesentlichen lose Schichtung ergeben sich zwischen den Schichten zumindest stellenweise eine oder mehrere dünne Luftschichten. An den Übergängen der Schichten zu den Luftschichten liegen entsprechende Dichteunterschiede und dementsprechend relativ hohe Impedanzsprünge vor, die dem erfindungsgemäßen Leichtbauteil eine hervorragende akustische Wirksamkeit verleihen. Messungen haben gezeigt, dass erfindungsgemäße Bauteile trotz ihrer geringen Gesamtflächenmasse gute und in speziellen Ausgestaltungen sogar verbesserte Schalldämmeigenschaften besitzen als herkömmliche Bauteile mit Schwerschicht. Messungen haben insbesondere gezeigt, dass erfindungsgemäße Bauteile bei mittleren und hohen Schallfrequenzen eine relativ hohe schallabsorbierende wie auch schalldämmende Wirkung haben.

Die schallabsorbierende und schalldämmende Vliesschicht des erfindungsgemäßen Bauteils ist vorzugsweise aus Polyethylenterephthalat-Fasern und/oder Polypropylen-Fasern gebildet. Die Luftdurchlässigkeit bzw. der Strömungswiderstand der Vliesschicht wird durch Verpressung so eingestellt, dass sich ein Optimum an schallabsorbierender und schalldämmender Wirkung ergibt. Die Dicke der Vliesschicht liegt vorzugsweise bei einem Flächengewicht im Bereich von 500 bis 1.300 g/m² im Bereich von 2 bis 5 mm.

Eine vorteilhafte Ausgestaltung des erfindungsgemäßen Leichtbauteils besteht darin, dass an der der Deckschicht abgewandten Seite der Vliesschicht eine weitere luftdurchlässige Vliesschicht aus thermoplastischen Fasern angeordnet ist, wobei beide Vliesschichten jeweils eine Dicke im Bereich von 2 bis 5 mm und jeweils ein Flächengewicht im Bereich von 500 bis 700 g/m² aufweisen. Die beiden Vliesschichten können dabei die gleiche Dicke und das gleiche Flächengewicht aufweisen, beispielsweise ein Flächengewicht von 600 g/m² und eine Dicke von etwa 3 mm. Auch die beiden Vliesschichten liegen vorzugsweise im wesentlichen lose aufeinander bzw. aneinander, so dass ihre einander zugewandten Schichtgrenzen eine dünne Luftschicht begrenzen bzw. dort ein Dichteunterschied und ein entsprechender Impedanzsprung vorliegt.

Nach einer weiteren vorteilhaften Ausgestaltung der Erfindung ist vorgesehen, dass in der mindestens einen Vliesschicht aus thermoplastischen Fasern Abstandshalter ausgebildet sind. Durch die Abstandshalter entstehen zwischen der Vliesschicht und der benachbarten Schicht bzw. einem benachbarten Blech dünne luftgefüllte Hohlräume. Diese Ausgestaltung ist insbesondere wegen des am Übergang zwischen Vliesschicht und Luftschicht vorliegenden Impedanzsprunges akustisch besonders wirksam.

Eine relativ hohe Schallabsorption lässt sich mit dem erfindungsgemäßen Leichtbauteil erreichen, wenn zwischen der Deckschicht und der Vliesschicht eine offenzellige Schaumstoffschicht angeordnet ist, die bei einem Flächengewicht im Bereich von vorzugsweise nur 100 bis 200 g/m² eine Dicke im Bereich von 7 bis 15 mm aufweist. Die Schaumstoffschicht kann insbesondere aus Polyurethanschaum oder Melaminharzschaum bestehen.

Die Deckschicht des erfindungsgemäßen Leichtbauteils kann nach einer vorteilhaften Ausgestaltung durch ein Polyesterfaservlies mit einem Flächengewicht im Bereich von 70 bis 110 g/m² oder ein Spinnvlies mit einem Flächengewicht im Bereich von 60 bis 100 g/m² gebildet sein. Ein besonders hoher Schallabsorptionskoeffizient wurde mit einer Ausführung erreicht, bei der unmittelbar hinter dem Spinnvlies ein Polyesterfaservlies mit einem Flächengewicht im Bereich von 70 bis 110 g/m² angeordnet ist. Der Strömungswiderstand des Spinnvlieses ist dabei vorzugsweise größer als der des Polyesterfaservlieses.

Das erfindungsgemäße Leichtbauteil kann in einem Kraftfahrzeug insbesondere als motorseitige Stirnwandverkleidung zum Einsatz kommen. Alternativ oder ergänzend kann es auch zur Verkleidung der dem Fahrgastraum zugewandten Stirnwandseite verwendet werden, wobei seine Deckschicht dann vorzugsweise durch eine Teppichschicht gebildet ist.

Bei einer besonders bevorzugten Ausgestaltung besteht die Teppichschicht aus einem Tuftteppich, der einen akustisch offenen Tuftträger und eine luftdurchlässige, netzartige Tufteinbindung aufweist. Eine weitere vorteilhafte Ausgestaltung besteht dabei darin, dass die Tufteinbindung mit mineralischen Mikrokörpern und/oder mineralischen Mikrohohlkörpern versehen ist. Hierdurch kann ein Tuftteppich mit relativ geringem Flächengewicht und gleichzeitig ausgezeichneter Formstabilität erzielt werden. Das Flächengewicht der Teppichschicht liegt beispielsweise in einem Bereich von nur 200 bis 400 g/m².

Weitere bevorzugte und vorteilhafte Ausgestaltungen des erfindungsgemäßen Leichtbauteils sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: eine vereinfachte Querschnittansicht eines Abschnitts eines ersten erfindungsgemäßen Leichtbauteils in Form eines KraftfahrzeugTeppichbodens;
- Fig. 2: eine vereinfachte Querschnittansicht eines Abschnitts eines zweiten erfindungsgemäßen Leichtbauteils in Form eines KraftfahrzeugTeppichbodens;
- Fig. 3: eine vereinfachte Querschnittansicht eines Abschnitts eines dritten erfindungsgemäßen Leichtbauteils in Form einer motorseitigen Stirnwandverkleidung;
- Fig. 4: eine vereinfachte Querschnittansicht eines Abschnitts eines vierten erfindungsgemäßen Leichtbauteils in Form einer motorseitigen Stirnwandverkleidung;
- Fig. 5: eine vereinfachte Querschnittansicht eines Abschnitts eines fünften erfindungsgemäßen Leichtbauteils in Form einer motorseitigen Stirnwandverkleidung;
- Fig. 6: eine vereinfachte Querschnittansicht eines Abschnitts eines sechsten erfindungsgemäßen Leichtbauteils in Form einer motorseitigen Stirnwandverkleidung;
- Fig. 7: eine vereinfachte Querschnittansicht eines Abschnitts eines siebten erfindungsgemäßen Leichtbauteils in Form einer motorseitigen Stirnwandverkleidung;
- Fig. 8: eine vereinfachte Querschnittansicht eines Abschnitts eines achten erfindungsgemäßen Leichtbauteils in Form einer motorseitigen Stirnwandverkleidung;
- Fig. 9: eine Darstellung der Schalldämmung als Funktion der Frequenz für eine in einem erfindungsgemäßen Leichtbauteil verwendete luftdurchlässige Vliesschicht ohne und mit einem luftdurchlässigen Spinnvlies als Deckschicht im Vergleich zu einem Stahlblech und einer aus einem Elastomer gebildeten, luftdichten Schwerschicht;
- Fig. 10: eine Darstellung der Schallabsorption als Funktion der Frequenz für verschiedene erfindungsgemäße, als motorseitige Stirnwandverkleidung bestimmte Leichtbauteile im Vergleich zu zwei als Stirnwandverkleidung geeignete Schichtaufbauten, die jeweils eine aus einem Elastomer gebildete, luftdichte Schwerschicht aufweisen; und
- Fig. 11: eine Darstellung der Schallabsorption als-Funktion der Frequenz für verschiedene erfindungsgemäße, als fahrgastraumseitige Stirnwand-oder Bodenverkleidung bestimmte Leichtbauteile, die als Deckschicht jeweils eine Teppichschicht aufweisen, im Vergleich zu ähnlichen Teppichbodenaufbauten, die jedoch jeweils einen luftdichten Teppichrücken umfassen.

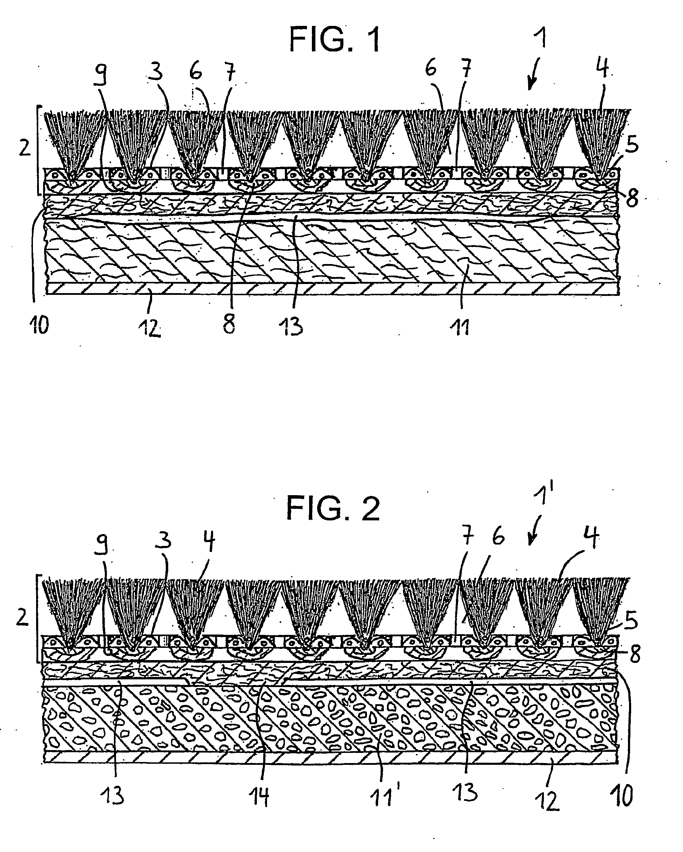

Fig. 1 zeigt einen Abschnitt eines für ein Kraftfahrzeug bestimmten Teppichbodenaufbaus 1, der im Vergleich zu herkömmlichen Kraftfahrzeug-Teppichbodenaufbauten, die nach Art eines Feder-Masse-Systems eine als schalldämmende Masse dienende Schwerschicht aufweisen, ein Leichtbauteil darstellt. Der erfindungsgemäße Teppichbodenaufbau 1 ist aus einer getufteten Velour-Teppichschicht gebildet. Mit 3 ist ein Tuftträger bezeichnet, in den die Polfäden 4 bzw. Polnoppen 5 eingezogen sind. Der Tuftträger 3 besteht aus einem Vliesstoff, beispielsweise aus einem Polyester-Spinnvlies. Es ist zu erkennen, dass der Tuftträger 3 eine Vielzahl von Polnoppenlücken 6 definierenden Perforationen 7 aufweist, die durch polnadellose Tuftnadeln erzeugt wurden. Die Polnoppenlücken 6 erhöhen das akustisch wirksame Luftvolumen in der Velour-Teppichschicht 2. Bezogen auf ihre Gesamtfläche weist die Velour-Teppichschicht 2 eine im wesentlichen homogene Polnoppendichte auf.

Zur Einbindung der in den Tuftträger 3 eingezogenen Polnoppen 5 wurde auf dessen Unterseite zunächst ein erster Klebstoff 8 aufgetragen, der sich beim Aufbringen im wesentlichen nur an den Polnoppen 5 anlagert und die durch die polnadellosen Tuftnadeln erzeugten Perforationen 7 im wesentlichen frei lässt. Auf diese Tufteinbindung ist ein weiterer Pulverkleber 9 aufgesintert. Der erste Kleber 8 und/oder der aufgesinterte Pulverkleber 9 enthalten vorzugsweise mineralische Mikrokörper und/oder mineralische Mikrohohlkörper (nicht gezeigt). Die Teppichschicht 2 weist ein Flächengewicht im Bereich von 200 bis 400 g/m², beispielsweise 350 g/m² auf.

Auf die Teppichschicht 2 folgt eine aus thermoplastischen Fasern gebildete, luftdurchlässige Vliesschicht 10. Der Strömungswiderstand der vorzugsweise aus PET-Fasern und/oder PP-Fasern gebildeten Vliesschicht ist durch Verpressen eingestellt bzw. optimiert. Die Dicke der Vliesschicht 10 liegt bei einem Flächengewicht im Bereich von 500 bis 1.300 g/m² im Bereich von 2 bis 7 mm, insbesondere im Bereich von 2 bis 5 mm bei einem Flächengewicht im Bereich von etwa 600 bis etwa 1.000 g/m².

Die Vliesschicht 10 ist mit der Teppichschicht 2 nicht oder nur partiell verbunden. Die partielle Verbindung erfolgt gegebenenfalls durch Verschweißung und beschränkt sich auf einen Randbereich und gegebenenfalls auf den Randbereich einer oder mehrerer Durchbrechungen, die der Durchführung von Kabeln, Schlauchleitungen und/oder mechanischen Bedienungselementen dienen. Der mit der Teppichschicht 2 stoffschlüssig verbundene Flächenanteil der Vliesschicht 10 beträgt maximal 20%, vorzugsweise aber wesentlich weniger als 20% ihrer der Teppichschicht 2 zugewandten Fläche.

Unterhalb der Vliesschicht 10 ist eine aus einem Baumwollfaservlies gebildete Schicht 11 angeordnet, die auf dem Bodenblech 12 des Fahrzeugs aufliegt. Das Baumwollfaservlies 11 besitzt ein Flächengewicht im Bereich von etwa 600 bis 1.100 g/m², insbesondere im Bereich von etwa 700 bis 1.000 g/m². Bei einem Flächengewicht im Bereich von etwa 600 bis 700 g/m² beträgt seine Dicke etwa 6 mm. Bei einem Flächengewicht im Bereich von 1.000 bis 1.100 g/m² ist das Baumwollfaservlies dagegen etwa 15 bis 20 mm dick.

Es ist zu erkennen, dass die Vliesschicht 10 im wesentlichen lose auf dem Baumwollfaservlies 11 aufliegt, so dass zwischen beiden Schichten 10, 11 dünne Luftschichten bzw. Luftkammern 13 vorhanden sind. Die beiden Schichten 10, 11 sind nicht oder nur partiell miteinander verbunden, wobei die Verbindung gegebenenfalls im Randbereich des durch die Schichten 2, 10 und 11 gebildeten Leichtbauteils und/oder im Randbereich von darin ausbildeten Durchbrechungen (nicht gezeigt) angeordnet ist.

In Fig. 2 ist ein weiterer erfindungsgemäßer Kraftfahrzeug-Teppichbodenaufbau 1' dargestellt, der weitgehend dem Teppichbodenaufbau gemäß Fig. 1 entspricht. Er unterscheidet sich von dem Teppichbodenaufbau gemäß Fig. 1 dadurch, dass anstelle eines Baumwollfaservlieses eine im wesentlichen Schaumstoffschicht 11' unterhalb der Vliesschicht 10 angeordnet ist. Auch bei diesem Teppichbodenaufbau liegen die Schichten 2, 10 und 11' im wesentlichen lose aufeinander. In der Vliesschicht 10 können zudem Vertiefungen bzw. Erhöhungen 14 eingeprägt sein, die zur Bildung dünner Luftkammern 13 beitragen. Die Schaumstoffschicht 11' besteht vorzugsweise aus offenzelligem Polyurethan-Weichschaum, insbesondere aus Kaltschaum. Die Schaumstoffschicht 11' besitzt bei einem Flächengewicht im Bereich von etwa 900 bis 1.300 g/m² eine Dicke im Bereich von etwa 15 bis 22 mm.

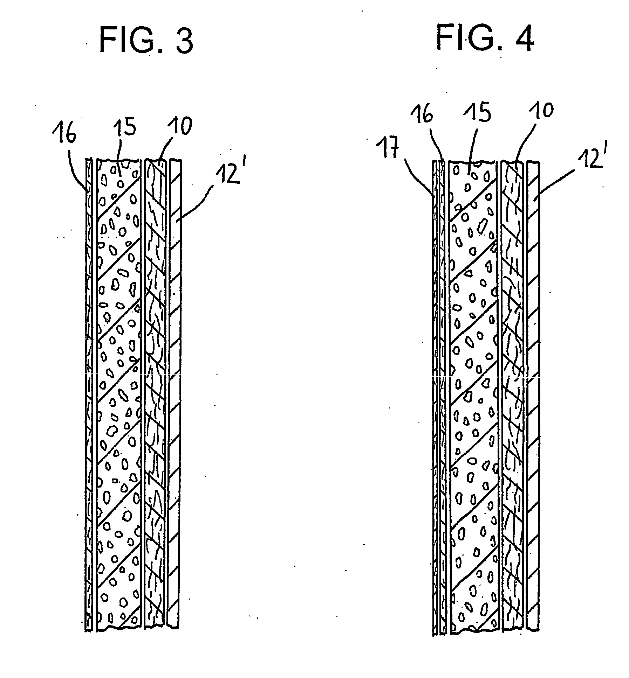

In den Figuren 3 bis 8 sind Abschnitte von motorseitigen Stirnwandverkleidungen dargestellt, die ebenfalls jeweils als Leichtbauteil konzipiert sind. Mit 12' ist ein Stirnwandblech bezeichnet. Die Innenseite des Stirnwandblechs 12' ist zumindest bereichsweise mit einem Teppichbodenaufbau 1 oder 1' gemäß Fig. 1 bzw. Fig. 2 verkleidet (in den Figuren 3 bis 8 nicht dargestellt).

Die in den Figuren 3 und 4 gezeigten Stirnwandverkleidungen weisen jeweils eine luftdurchlässige Vliesschicht 10 auf, die im wesentlichen lose an der Stirnwand 12' anliegt und aus thermoplastischen Fasern, vorzugsweise aus PET-Fasern und/oder Polypropylen-Fasern gebildet ist. Der Strömungswiderstand der Vliesschicht 10 ist wiederum durch den Verdichtungsgrad des Faservlieses eingestellt worden. Die Vliesschicht 10 hat bei einem Flächengewicht im Bereich von etwa 500 und bis 1.100 g/m² eine Dicke im Bereich von etwa 2 bis 5 mm, beispielsweise etwa 3 mm. Die Vliesschicht 10 ist mit einer offenzelligen Schaumstoffschicht 15 belegt. Bei dem Schaumstoff handelt es sich beispielsweise um Polyurethanschaum oder um Melaminharzschaum. Die Schaumstoffschicht 15 hat ein Flächengewicht im Bereich von etwa 100 bis 200 g/m² und eine Dicke im Bereich von etwa 7 bis 15 mm, beispielsweise etwa 9 mm.

Zum Motorraum hin weist die Stirnwandverkleidung eine relativ dünne, luftdurchlässige Vliesschicht 16 als Deckschicht auf. Bei dem Ausführungsbeispiel gemäß Fig. 3 besteht die Deckschicht aus einem Polyesterfaservlies 16, das ein Flächengewicht im Bereich von etwa 70 bis 110 g/m² besitzt. Die Dicke des Polyesterfaservlieses 16 beträgt weniger als 1 mm, vorzugsweise weniger als 0,8 mm.

Bei dem Ausführungsbeispiel gemäß Fig. 4 besteht die Deckschicht dagegen aus einem dünnen Spinnvlies 17, wobei unmittelbar hinter dem Spinnvlies 17 ein Polyesterfaservlies 16 gemäß Fig. 3 angeordnet ist. Das Spinnvlies 17 hat ein Flächengewicht im Bereich von 60 bis 100 g/m², beispielsweise etwa 80 g/m², und besitzt einen höheren Strömungswiderstand als das Polyesterfaservlies 16.

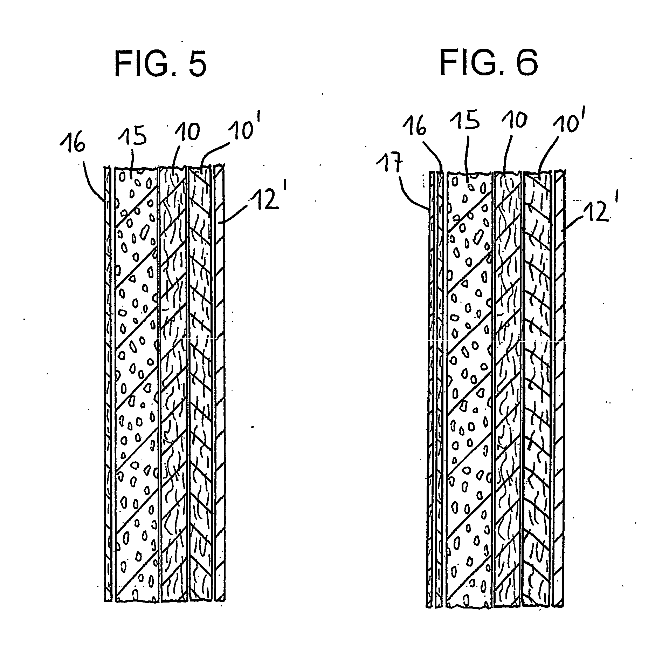

Die in den Figuren 5 und 6 dargestellten Abschnitte erfindungsgemäßer Stirnwandverkleidungen unterscheiden sich von den in den Figuren 3 und 4 gezeigten Ausführungsbeispielen dadurch, dass an der der Deckschicht abgewandten Seite der Vliesschicht 10 eine weitere luftdurchlässige Vliesschicht 10' aus thermoplastischen Fasern angeordnet ist. Beide Vliesschichten 10, 10' haben jeweils eine Dicke im Bereich von 2 bis 5 mm und weisen dabei jeweils ein Flächengewicht im Bereich von 500 bis 700 g/m² auf.

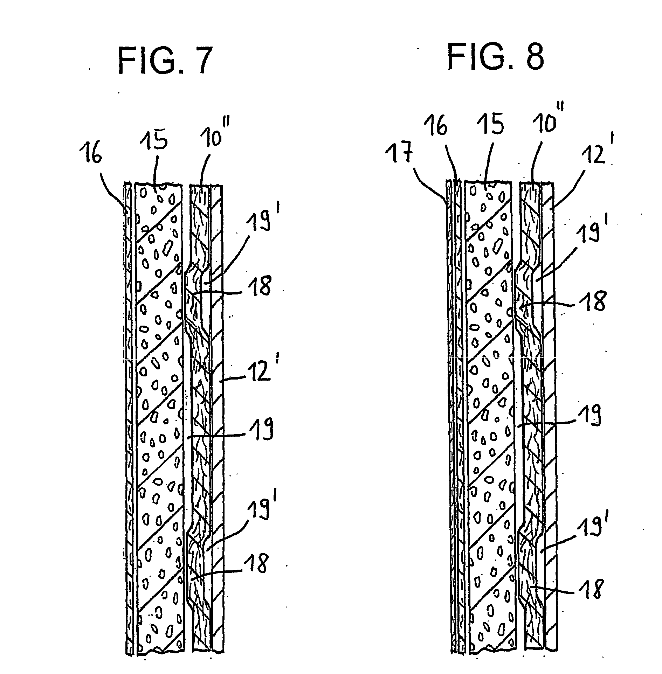

Wie in den Figuren 7 und 8 gezeigt, können in der Vliesschicht 10" vorteilhaft auch Abstandshalter 18 ausgebildet, insbesondere ausgeprägt sein, um definierte dünne Luftkammern 19, 19' zwischen den Schichten 10", 15 bzw. zwischen der Vliesschicht 10" und dem Stirnwandblech 12' zu schaffen.

Die Schichten 10, 10', 10", 15, 16 und gegebenenfalls 17 der Stirnwandverkleidung gemäß den Figuren 3 bis 8 liegen jeweils lose aufeinander, so dass zwischen den Schichten dünne Luftschichten gebildet sind. Die Schichten 10, 10', 10", 15, 16, 17 sind lediglich punkt- oder stellenweise am Stirnwandblech 12' fixiert. Im Stirnwandblech 12' vorhandene Durchbrechungen (nicht gezeigt), z.B. für Leitungen einer Heiz- und Klimaanlage, elektrische Kabel, Bowdenzüge, Gestänge, Hebel oder die Lenkwelle, werden durch die flexiblen, anpassungsfähigen Schichten 10, 10', 10", 15, 16, 17 des erfindungsgemäßen Leichtbauteil akustisch abgedichtet.

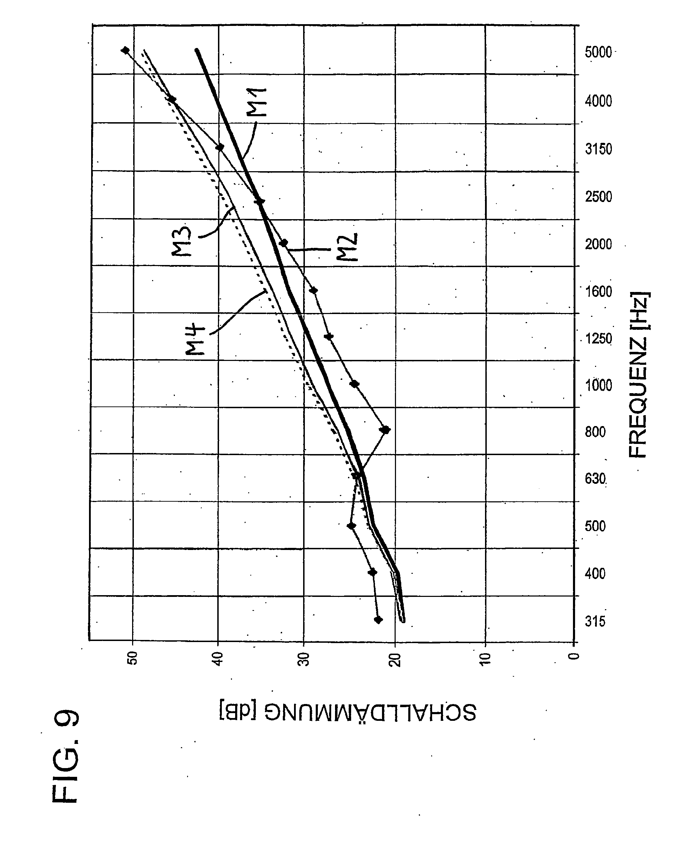

Fig. 9 zeigt Vergleichsmessungen der Schalldämmung als Funktion der Frequenz für eine in einem erfindungsgemäßen Leichtbauteil verwendete luftdurchlässige Vliesschicht ohne und mit einem luftdurchlässigen Spinnvlies als Deckschicht in bezug auf ein 0,8 mm dickes Stahlblech und eine Schwerschicht mit einem Flächengewicht von etwa 3,25 kg/m². Die Messkurve M1 zeigt die Schalldämmung, die sich für das Stahlblech ergibt. Es ist zu erkennen, dass die Schalldämmung bei höheren Schallfrequenzen im allgemeinen größer ist. Die Messkurve M2 gibt die Messwerte für die Schwerschicht wieder. Aufgrund von Resonanzeinflüssen lag die Schalldämmung der Schwerschicht in einem Frequenzbereich von etwa 700 bis 2.500 Hz unterhalb der Schalldämmwirkung des bloßen Stahlblechs. Die Messkurve M3 gibt die Messwerte für eine auf etwa 3 mm Dicke verpresste, ein Flächengewicht von etwa 600 g/m² aufweisende Vliesschicht wieder. Überraschend ist, dass die mit dieser luftdurchlässigen Vliesschicht erreichte Schalldämmung im Vergleich zu der Schwerschicht relativ hoch ist. Die gestrichelte Messkurve M4 zeigt die Messwerte für eine entsprechende Vliesschicht, die zur Schallseite hin zusätzlich mit einem ein Flächengewicht von ca. 80 g/m² aufweisenden Spinnvlies belegt wurde.

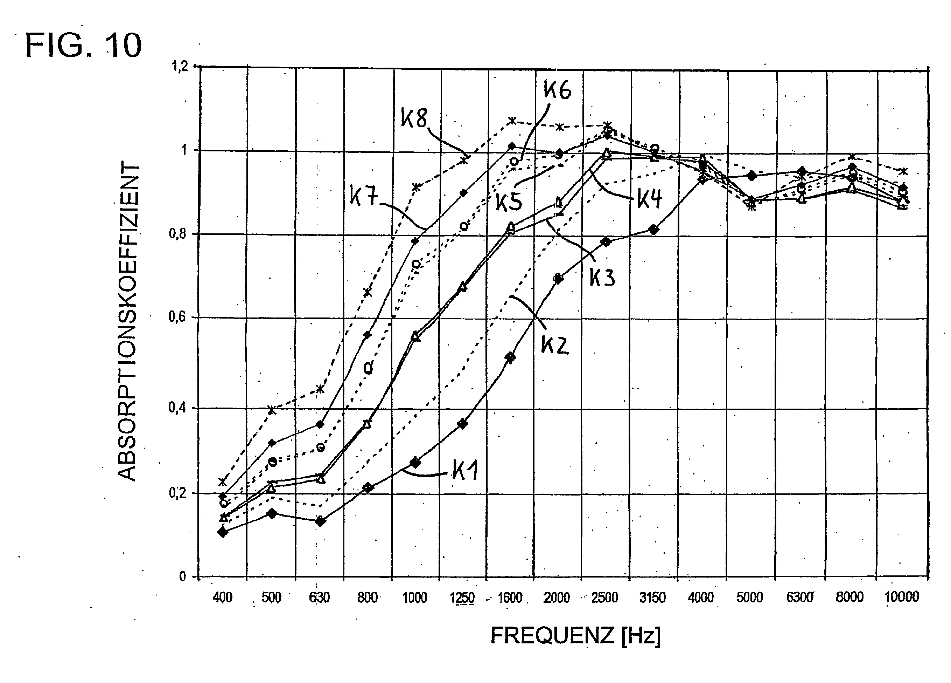

Fig. 10 zeigt die Schallabsorption als Funktion der Frequenz für verschiedene erfindungsgemäße, als Stirnwandverkleidung bestimmte Leichtbauteile im Vergleich zu zwei als Stirnwandverkleidung geeignete Schichtaufbauten, die jeweils eine Schwerschicht mit einem Flächengewicht von etwa 3,2 kg/m² aufweisen.

Die Kurve K1 gibt die Messwerte für einen Schichtaufbau wieder, der aus einer luftdichten Schwerschicht mit 3,2 kg/m², einer ca. 9 mm dicken offenzelligen PUR-Schaumschicht und einem luftdurchlässigem PES-Vlies bestand. Die gestrichelte Kurve K2 betrifft einen entsprechenden Schichtaufbau, der jedoch zusätzlich auf dem PES-Vlies ein Spinnvlies mit einem Flächengewicht von etwa 80 g/m² als Deckschicht aufweist.

Die Kurve K3 entspricht der Absorptionsmessung bei einem erfindungsgemäßen Schichtaufbau, bei dem anstelle der erwähnten Schwerschicht eine gepresste, luftdurchlässige Vliesschicht verwendet wurde, die bei einer Dicke von etwa 3 mm ein Flächengewicht von nur etwa 600 g/m² aufweist. Die durch Dreiecke gekennzeichnete Kurve K4 betrifft einen ähnlichen Schichtaufbau, bei dem das Flächengewicht der gepressten, luftdurchlässigen Vliesschicht jedoch bei etwa 1.000 g/m² liegt.

Die Kurven K5 und K6 betreffen erfindungsgemäße Schichtaufbauten, die wiederum eine gepresste, luftdurchlässige Vliesschicht, eine ca. 9 mm dicke offenzellige PUR-Schaumschicht und eine relativ dünne luftdurchlässige PES-Vliesschicht aufweisen. Der der Kurve K5 zugehörige Schichtaufbau umfasst darüber hinaus ein dünnes Spinnvlies mit einem Flächengewicht von etwa 80 g/m² als Deckschicht, wobei die gepresste, luftdurchlässige Vliesschicht bei einer Dicke von ca. 3 mm ein Flächengewicht von ca. 600 g/m² aufweist. Die Kurve K6 gehört zu einem entsprechenden Schichtaufbau, der ebenfalls als Deckschicht ein dünnes Spinnvlies mit einem Flächengewicht von etwa 80 g/m² aufweist, wobei das Flächengewicht der ca. 3 mm dicken, gepressten, luftdurchlässigen Vliesschicht bei diesem Schichtaufbau aber ca. 1.000 g/m² beträgt.

Die Kurven K7 und K8 betreffen Schichtaufbauten, die sich von den den Kurven K3 und K5 zugrundeliegenden Schichtaufbauten dadurch unterscheiden, dass an der der Deckschicht abgewandten Seite der gepressten, luftdurchlässigen Vliesschicht eine weitere entsprechende Vliesschicht angeordnet ist, d.h. beide Vliesschichten, die lose aufeinanderliegen, haben jeweils eine Dicke von etwa 3 mm und jeweils ein Flächengewicht von etwa 600 g/m². Die Kurve K8 gehört dabei zu dem Schichtaufbau, der als Deckschicht ein dünnes Spinnvlies mit einem Flächengewicht von etwa 80 g/m² aufweist.

Wie die Kurven K3, K5, K7 und K8 zeigen, führt das dünne, sehr leichte Spinnvlies sowie die Verwendung der zwei lose aufeinanderliegenden, luftdurchlässigen Vliesschichten zu einer erheblichen Verbesserung der Schallabsorption.

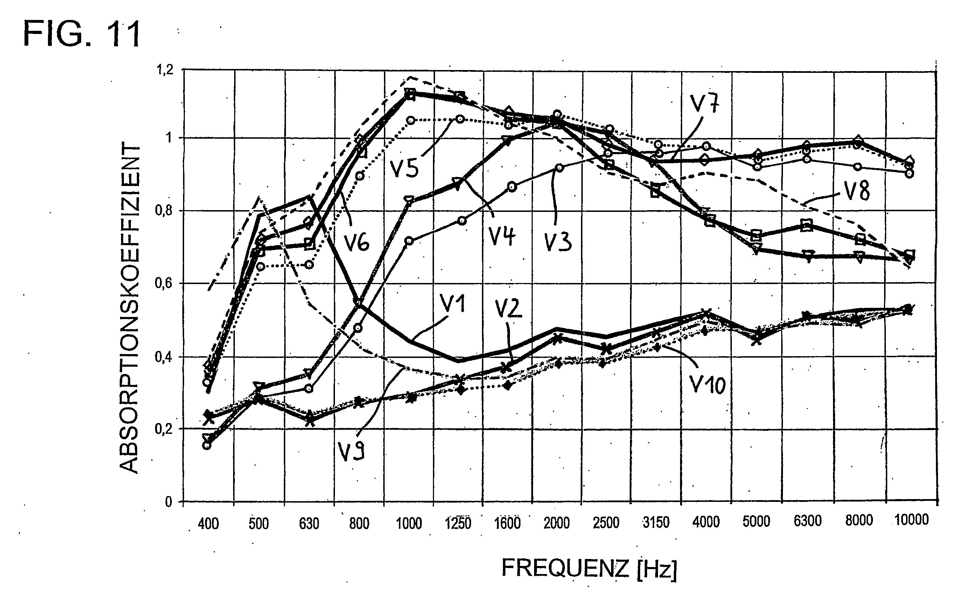

Fig. 11 zeigt schließlich die Schallabsorption als Funktion der Frequenz für verschiedene erfindungsgemäße Stirnwand- oder Bodenverkleidungen, die jeweils eine Teppichschicht als Deckschicht und einen luftdurchlässigen Unterbau aufweisen, im Vergleich zu Teppichbodenaufbauten, die jeweils mit einem luftdichten Teppichrücken ausgerüstet sind.

Die Kurve V10 gehört zu einem Teppichbodenaufbau, der aus einer Teppichoberware mit einem Schwerschichtrücken und einer darunter angeordneten Kaltschaumschicht gebildet ist, wobei die Kaltschaumschicht ein Flächengewicht von etwa 1.200 g/m² aufweist. Der Messkurve V9 liegt ein Teppichbodenaufbau zugrunde, der eine entsprechende Kaltschaumschicht umfasst, jedoch eine andere Teppichoberware mit einem Folienrücken aufweist.

Die Messergebnisse für einen Teppichbodenaufbau, der aus einer Teppichoberware mit Schwerschichtrücken, einer darauf folgenden Vliesschicht mit einem Flächengewicht von 1.000 g/m² und einem darauf folgenden Baumwollfaservlies mit einem Flächengewicht von 700 g/m² gebildet ist, zeigt die Kurve V1. Die Kurve V2 gibt dagegen die Messergebnisse für einen Teppichbodenaufbau wieder, der ebenfalls eine Vliesschicht mit einem Flächengewicht von 1.000 g/m² und als Unterschicht ein Baumwollfaservlies mit einem Flächengewicht von 700 g/m², jedoch die andere Teppichoberware mit Folienrücken aufweist.

Die Kurven V3 bis V8 betreffen jeweils Teppichbodenaufbauten, die als Oberware eine akustisch offene Velour-Teppichschicht gemäß den Figuren 1 und 2 mit einem Flächengewicht von etwa 350 g/m² und eine luftdurchlässige, etwa 3 mm dicke, gepresste Vliesschicht mit einem Flächengewicht von etwa 1.000 g/m² aufweisen. Die zu den Kurven V3 und V4 gehörenden Teppichbodenaufbauten umfassen ferner jeweils ein Baumwollfaservlies mit einem Flächengewicht von etwa 700 g/m² als unterste Schicht. Bei den Teppichbodenaufbauten, die den Kurven V5 und V6 zugrunde liegen, ist dagegen jeweils als unterste Schicht ein Baumwollfaservlies mit einem Flächengewicht von etwa 1.000 g/m², und bei den Teppichbodenaufbauten, die den Kurven V7 und V8 zugrunde liegen, jeweils als unterste Schicht ein Kaltschaum mit einem Flächengewicht von etwa 1.200 g/m² verwendet worden. Die gemessenen Teppichbodenaufbauten unterscheiden sich schließlich dadurch, dass bei den den Kurven V4, V6 und V8 zugrundeliegenden Teppichbodenaufbauten jeweils zwischen der Teppichoberware und der etwa 3 mm dicken, luftdurchlässigen Vliesschicht eine etwa 40 µm dicke Kunststofffolie angeordnet ist. Der Vergleich der Kurven V4, V6 und V8 mit den Kurven V3, V5 und V7 zeigt, dass die mit der Kunststofffolie ausgestatteten Teppichbodenaufbauten bei höheren Frequenzen einen deutlich geringeren Schallabsorptionskoeffizienten aufweisen als die erfindungsgemäßen Teppichbodenaufbauten ohne Kunststofffolie.

## Patentansprüche

1. Mehrschichtiges, schallabsorbierendes Bauteil, insbesondere für Kraftfahrzeuge, mit einer luftdurchlässigen Deckschicht (2, 16, 17) und mindestens einer luftdurchlässigen Vliesschicht (10, 10', 10") aus thermoplastischen Fasern, wobei die Deckschicht (2, 16, 17) schalldurchlässig mit der Vliesschicht (10, 10', 10") gekoppelt ist,
**dadurch gekennzeichnet, dass**
die Vliesschicht (10, 10', 10") bei einem Flächengewicht im Bereich von 500 bis 1.500 g/m² eine Dicke im Bereich von 2 bis 7 mm aufweist und mit der Deckschicht (2, 16, 17) nicht oder nur partiell mit einem Flächenanteil von weniger als 20% ihrer der Deckschicht (2, 16, 17) zugewandten Fläche verbunden ist.

2. Bauteil nach Anspruch 1,
**dadurch gekennzeichnet, dass** die Vliesschicht (10,10', 10") bei einem Flächengewicht im Bereich von 500 bis 1.300 g/m² eine Dicke im Bereich von 2 bis 5 mm aufweist.

3. Bauteil nach Anspruch 1 oder 2,
**dadurch gekennzeichnet, dass** die Vliesschicht (10, 10', 10") aus Polyethylenterephthalat-Fasern und/oder Polypropylen-Fasern gebildet ist.

4. Bauteil nach einem der Ansprüche 1 bis 3,
**dadurch gekennzeichnet, dass** die Deckschicht (2, 16, 17) und die Vliesschicht (10, 10', 10") nur in einem Randbereich der Vliesschicht und/oder in einem Randbereich eines in der Deckschicht (2, 16, 17) sowie der Vliesschicht (10, 10', 10") ausgebildeten Durchbruchs miteinander verbunden sind.

5. Bauteil nach einem der Ansprüche 1 bis 4,
**dadurch gekennzeichnet, dass** an der der Deckschicht (2, 16, 17) abgewandten Seite der Vliesschicht (10)eine weitere luftdurchlässige Vliesschicht (10') aus thermoplastischen Fasern angeordnet ist, wobei beide Vliesschichten (10, 10') jeweils eine Dicke im Bereich von 2 bis 5 mm und jeweils ein Flächengewicht im Bereich von 500 bis 700 g/m² aufweisen.

6. Bauteil nach einem der Ansprüche 1 bis 5,
**dadurch gekennzeichnet, dass** zwischen der Deckschicht (16, 17) und der Vliesschicht (10, 10") aus thermoplastischen Fasern eine offenzellige Schaumstoffschicht (15) angeordnet ist.

7. Bauteil nach Anspruch 6,
**dadurch gekennzeichnet, dass** die Schaumstoffschicht (15) bei einem Flächengewicht im Bereich von 100 bis 200 g/m² eine Dicke im Bereich von 7 bis 15 mm aufweist.

8. Bauteil nach Anspruch 6 oder 7,
**dadurch gekennzeichnet, dass** die Schaumstoffschicht (15) aus Polyurethanschaum oder Melaminharzschaum besteht.

9. Bauteil nach einem der Ansprüche 1 bis 8,
**dadurch gekennzeichnet, dass** die Deckschicht durch ein Polyesterfaservlies (16) mit einem Flächengewicht im Bereich von 70 bis 110 g/m² oder ein Spinnvlies (17) mit einem Flächengewicht im Bereich von 60 bis 100 g/m² gebildet ist.

10. Bauteil nach Anspruch 9,
**dadurch gekennzeichnet, dass** unmittelbar hinter dem Spinnvlies (17) ein Polyesterfaservlies (16) mit einem Flächengewicht im Bereich von 70 bis 110 g/m² angeordnet ist.

11. Bauteil nach einem der Ansprüche 1 bis 8,
**dadurch gekennzeichnet, dass** die Deckschicht durch eine Teppichschicht (2) gebildet ist.

12. Bauteil nach Anspruch 11,
**dadurch gekennzeichnet, dass** die Teppichschicht (2) aus einem Tuftteppich gebildet ist, der einen akustisch offenen Tuftträger (3) und eine luftdurchlässige, netzartige Tufteinbindung aufweist.

13. Bauteil nach Anspruch 12,
**dadurch gekennzeichnet, dass** die Tufteinbindung mit mineralischen Mikrokörpern und/oder mineralischen Mikrohohlkörpern versehen ist.

14. Bauteil nach einem der Ansprüche 11 bis 13,
**dadurch gekennzeichnet, dass** die Teppichschicht (2) ein Flächengewicht im Bereich von 200 bis 400 g/m² aufweist.

15. Bauteil nach einem der Ansprüche 1 bis 14,
**dadurch gekennzeichnet, dass** an der der Deckschicht(2) abgewandten Seite der Vliesschicht (10) eine offenzellige Schaumstoffschicht (11') oder eine aus einem Baumwollfaservlies gebildete Schicht (11) angeordnet ist.

16. Bauteil nach Anspruch 15,
**dadurch gekennzeichnet, dass** das Baumwollfaservlies (11) bei einem Flächengewicht im Bereich von 600 bis 1.100 g/m² eine Dicke im Bereich von 5 bis 20 mm aufweist.

17. Bauteil nach Anspruch 15,
**dadurch gekennzeichnet, dass** die Schaumstoffschicht (11') bei einem Flächengewicht im Bereich von 900 bis 1.300 g/m² eine Dicke im Bereich von 15 bis 22 mm aufweist.

18. Bauteil nach einem der Ansprüche 1 bis 17,
**dadurch gekennzeichnet, dass** in der Vliesschicht (10, 10") aus thermoplastischen Fasern Erhöhungen (14) oder Abstandshalter (18) ausgebildet sind.

## Claims

1. A multi-layer, sound-absorbing component, in particular for motor vehicles, having an air-permeable cover layer (2, 16, 17) and at least one air-permeable fleece layer (10, 10', 10") of thermoplastic fibres, the cover layer (2, 16, 17) being coupled to the fleece layer (10, 10', 10") in a sound-transmissive manner,
**characterised in that** the fleece layer (10, 10', 10") has a thickness in the range from 2 to 7 mm for a weight per area unit in the range from 500 to 1,500 g/m² and is not connected or only partially connected to the cover layer (2, 16, 17) with a surface area of less than 20% of its surface facing the cover layer (2, 16, 17).

2. The component according to claim 1,
**characterised in that** the fleece layer (10, 10', 10") has a thickness in the range from 2 to 5 mm for a weight per area unit in the range from 500 to 1,300 g/m².

3. The component according to claim 1 or 2,
**characterised in that** the fleece layer (10, 10' 10") is formed from polyethylene-terephthalate fibres and/or polypropylene fibres.

4. The component according to any of claims 1 to 3,
**characterised in that** the cover layer (2, 16, 17) and the fleece layer (10, 10', 10") are only connected with one another in an edge region of the fleece layer and/or in an edge region of an opening formed in the cover layer (2, 16, 17) as well as the fleece layer (10, 10', 10").

5. The component according to any of claims 1 to 4,
**characterised in that** a further air-permeable fleece layer (10') of thermoplastic fibres is arranged on the side of the fleece layer (10) facing away from the cover layer (2, 16, 17), each fleece layer (10, 10') having a thickness in the range from 2 to 5 mm and a weight per area unit in the range from 500 to 700 g/m².

6. The component according to any of claims 1 to 5,
**characterised in that** an open-cell foam layer (15) is arranged between the cover layer (16, 17) and the fleece layer (10, 10") of thermoplastic fibres.

7. The component according to claim 6,
**characterised in that** the foam layer (15) has a thickness in the range from 7 to 15 mm for a weight per area unit in the range from 100 to 200 g/m².

8. The component according to claim 6 or 7,
**characterised in that** the foam layer (15) is made of polyurethane foam or melamine resin foam.

9. The component according to any of claims 1 to 8,
**characterised in that** the cover layer is formed by a polyester fibre fleece (16) having a weight per area unit in the range from 70 to 110 g/m² or a spunbond fabric (17) having a weight per area unit in the range from 60 to 100 g/m².

10. The component according to claim 9,
**characterised in that** a polyester fibre fleece (16) having a weight per area unit in the range from 70 to 110 g/m² is arranged directly behind the spunbond fabric (17).

11. The component according to any of claims 1 to 8,
**characterised in that** the cover layer is formed by a carpet layer (2).

12. The component according to claim 11,
**characterised in that** the carpet layer (2) is formed by a tufted carpet having an acoustically open tuft backing (3) and an air-permeable, netted tuft binding.

13. The component according to claim 12,
**characterised in that** the tuft binding is provided with mineral microbodies and/or hollow mineral microbodies.

14. The component according to any of claims 11 to 13,
**characterised in that** the carpet layer (2) has a weight per area unit in the range from 200 to 400 g/m².

15. The component according to any of claims 1 to 14,
**characterised in that** an open-cell foam layer (11') or a layer (11) formed from a cotton fibre fleece is arranged on the side of the fleece layer (10) facing away from the cover layer (2).

16. The component according to claim 15,
**characterised in that** the cotton fibre layer (11) has a thickness in the range from 5 to 20 mm for a weight per area unit in the range from 600 to 1,100 g/m².

17. The component according to claim 15,
**characterised in that** the foam layer (11') has a thickness in the range from 15 to 22 mm for a weight per area unit in the range from 900 to 1,300 g/m².

18. The component according to any of claims 1 to 17,
**characterised in that** elevations (14) or spacers (18) are formed in the fleece layer (10, 10") of thermoplastic fibres.

## Revendications

1. Elément multicouches à absorption acoustique, en particulier pour véhicules automobiles, avec une couche de recouvrement (2, 16, 17) perméable à l'air et au moins une couche de non-tissé (10, 10', 10") perméable à l'air, en fibres thermoplastiques, la couche de recouvrement (2, 16, 17) étant couplée, de manière perméable aux sons, avec la couche de non-tissé (10, 10', 10"), **caractérisé en ce que** la couche de non-tissé (10, 10', 10") présente une épaisseur de l'ordre de 2 à 7 mm pour un grammage de l'ordre de 500 à 1.500 g/m², et n'est pas reliée à la couche de recouvrement (2, 16, 17) ou seulement partiellement avec un partie de moins de 20% de sa surface orientée vers la couche de recouvrement (2, 16, 17).

2. Elément selon la revendication 1, **caractérisé en ce que** la couche de non-tissé (10, 10', 10" ) présente une épaisseur de l'ordre de 2 à 5 mm pour un grammage de l'ordre de 500 à 1.300 g/m².

3. Elément selon revendication 1 ou 2, **caractérisé en ce que** la couche de non-tissé (10, 10', 10") est réalisée en fibres de polytéréphtalate d'éthylène et / ou en fibres de polypropylène.

4. Elément selon l'une des revendications 1 à 3, **caractérisé en ce que** la couche de recouvrement (2, 16, 17) et la couche de non tissé (10, 10', 10") ne sont reliées ensemble que dans une zone marginale de la couche de non-tissé et / ou dans une zone marginale d'un à jour, pratiqué dans la couche de recouvrement (2, 16, 17) ainsi que dans la couche de non-tissé (10, 10', 10").

5. Elément selon l'une des revendications 1 à 4, **caractérisé en ce que**, sur la face de la couche de non-tissé (10), opposée à la couche de recouvrement (2, 16, 17), est disposée une autre couche de non-tissé (10') en fibres thermoplastiques perméable à l'air, les deux couche de non-tissé (10, 10') présentant chacune une épaisseur de l'ordre de 2 à 5 mm et un grammage respectif de l'ordre de 500 à 700 g/m².

6. Elément selon l'une des revendications 1 à 5, **caractérisé en ce que**, entre la couche de recouvrement (16, 17) et la couche de non-tissé (10, 10") en fibres thermoplastiques, est disposée une couche de mousse synthétique (15) à alvéoles ouvertes.

7. Elément selon la revendication 6, **caractérisé en ce que** la couche de mousse synthétique (15) présente une épaisseur de l'ordre de 7 à 15 mm pour un grammage de l'ordre de 100 à 200 g/m².

8. Elément selon revendication 6 ou 7, **caractérisé en ce que** la couche de mousse synthétique (15) consiste en une mousse de polyuréthane ou en une mousse de résine de mélamine.

9. Elément selon l'une des revendications 1 à 8, **caractérisé en ce que** la couche de recouvrement est formée par une nappe de fibres de polyester (16) avec un grammage de l'ordre de 70 à 110 g/m² ou par une nappe de monofils désorientés (17) avec un grammage de l'ordre de 60 à 100 g/m²_{.}

10. Elément selon la revendication 9, **caractérisé en ce que**, directement derrière le nappe de monofils désorientés (17) est disposé une nappe de fibres de polyester (16) avec un grammage de l'ordre de 70 à 110 g/m².

11. Elément selon l'une des revendications 1 à 8, **caractérisé en ce que** la couche de recouvrement est formée par une couche formant tapis (2).

12. Elément selon la revendication 11, **caractérisé en ce que** la couche formant tapis (2) est formée par un tapis tufté, qui présente un support tufté (3), perméable aux sons et une armure réticulée, perméable à l'air.

13. Elément selon la revendication 12, **caractérisé en ce que** l'armure du tufté est pourvue de microcorps minéraux et / ou de microcorps minéraux creux.

14. Elément selon l'une des revendications 11 à 13, **caractérisé en ce que** la couche formant tapis (2) présente un grammage de l'ordre de 200 à 400 g/m²

15. Elément selon l'une des revendications 1 à 14, **caractérisé en ce que**, sur la face de la couche de non-tissé (10), opposée à la couche de recouvrement (2), est disposée une couche de mousse synthétique (11') à alvéoles ouvertes ou une couche (11) formée par une nappe de fibres de coton.

16. Elément selon la revendication 15, **caractérisé en ce que** la nappe de fibres de coton (11) présente une épaisseur de l'ordre de 5 à 20 mm pour un grammage de l'ordre de 600 à 1.100 g/m²

17. Elément selon la revendication 15, **caractérisé en ce que** la couche de mousse synthétique (11') présente une épaisseur de l'ordre de 15 à 22 mm pour un grammage de l'ordre de 900 à 1.300 g/m²

18. Elément selon l'une des revendications 1 à 17, **caractérisé en ce que**, dans la couche de non-tissé (10', 10") en fibres thermoplastiques, sont formés des élévations (14) ou des écartements (18).
